# EUROPEAN PATENT SPECIFICATION

(11) **EP 4 553 324 B1**
(45) Date of publication and mention of the grant of the patent: **21.10.2026**
(21) Application number: 23208616.5
(22) Date of filing: 08.11.2023
(51) Int. Cl.: F16B 2/14, F16B 5/06, F16B 7/06, F16B 21/18

(54) **LOCKING MECHANISM FOR MOUNTING DEVICES TO EACH OTHER**
VERRIEGELUNGSMECHANISMUS ZUR BEFESTIGUNG VON VORRICHTUNGEN ANEINANDER
MÉCANISME DE VERROUILLAGE POUR DISPOSITIFS DE MONTAGE LES UNS SUR LES AUTRES

(43) Date of publication of application: 14.05.2025
(73) Proprietor: Rohde & Schwarz GmbH & Co. KG, 81671 München (DE)
(72) Inventor: Prins, Wouter, 81671 München (DE); Helfer, Michael, 81671 München (DE); Keles, Mustafa, 81671 München (DE)
(74) Representative: Novagraaf Group

(56) References cited:
- US-A- 4 775 260
- US-A1- 2009 252 570

## Description

The invention relates to locking mechanism for mounting devices to each other, the locking mechanism having a plurality of locking cartridges receivable in the devices, the locking cartridges having a clamping system, the clamping system having a screw and a rotating mechanism for rotating the screw in a clamping direction and a disassembling direction

The devices to be connected together can be radio devices. For some applications in harsh environments, it is required that the radio devices be connected in a very reliable manner. Currently, a plurality of screws are being used which are tightened with a prescribed torque. As a result, a block of two radio devices is obtained which then can be mounted in a rack.

Handling of the block of the two radio devices however is quite burdensome, in particular because of the combined weight of the two radio devices. The screws are not accessible when the radios are placed within the rack so that they have to be connected to each other before placing them in the rack.

From US 2009 / 0 252 570 A1 an anchor for temporary mounting within a hole in a workbench or other structure is known.

Further, US 4,775,260 A discloses a locking wedge apparatus for fastening a printed circuit board within an elongated slot in a rack.

The object of the invention is to provide a mechanism which allows to reliably connect two devices to each or disconnect them from each other in a reliable manner, preferably without tools being required.

In order to solve this object, the invention provides, according to claim 1, a locking mechanism for mounting devices to each other, the locking mechanism having a plurality of locking cartridges receivable in the devices, the locking cartridges having a clamping system, the clamping system having a screw and a rotating mechanism for rotating the screw in a clamping direction and a disassembling direction, the rotating mechanism including a torque limiter for limiting a torque applied to the screw in the clamping direction, wherein a handle is provided which can assume a rest position and an actuating position. The integrated torque limiter ensures that a predefined torque is applied to the screw when the screw is rotated in the clamping direction while preventing that excessive torque is applied to the screw. The handle allows rotating the screw in the clamping direction and the disassembling direction without there being the need to use a tool.

The rotating mechanism preferably includes an override mechanism for applying a torque onto the screw in the disassembling direction which is higher than the torque transmitted by the torque limiter in the clamping direction. The override mechanism ensures that a torque high enough to rotate the screw in the disassembling direction can be applied under any circumstances.

The torque limiter can include a biasing spring for creasing a pretension. The pretension can very easily be used to set the desired level of torque which can be applied to the screw.

The torque limiter can include at least one toothed element with asymmetrical teeth. An asymmetrical tooth has flanks which different orientation. One of the flanks is a "steep" flank while the other flank is oriented so as to have a slight inclination. The different orientations make asymmetrical teeth particularly suitable for forming the torque limiter. The flanks of the teeth with the slight inclination can be used for transmitting the torque in the clamping direction. Should the torque exceed a predefined level which is the result of the pretension generated by the biasing spring and the inclination of the flank, the flanks slide with respect to each other so that no further torque can be transmitted in the clamping direction. If a torque is transmitted in the opposite direction, the steep flanks allow transmitting a higher torque in the disassembling direction.

The torque limiter can include a toothed disk which is mounted non-rotationally to the screw, and a driving housing which has a toothing cooperating with the toothed disk. The driving housing can receive the biasing spring so that a compact design is achieved.

The toothed disk can be held non-rotatably on the screw by means of a bolt extending through the screw and being received in a pocket on the side of the disk which faces away from the teeth of the disk. This construction requires only little constructional changes to be made to the screw for reliably connecting the disk to the screw.

One flank of the teeth can be arranged in a plane which extends through the central axis of the screw, and the other flank of the teeth can be arranged with a slight inclination with respect to a plane which is perpendicular to the central axis of the screw. This construction ensures that an "unlimited" torque can be transmitted in the disassembling direction as the steep flanks do not generate a "separating" force between the toothed disk and the driving housing which has to be counteracted by the biasing spring.

The biasing spring can be formed from a spring package which is arranged within the driving housing so as to be protected against dust.

The spring package can be supported with one end at the driving housing and with the opposite end at a nut which engages at the screw. The nut allows compressing the spring package during mounting of the torque limiter so that a required biasing force can be generated easily.

The spring package can be supported at the driving housing by means of a circlip which engages into a groove formed within the driving housing so that the spring package can be mounted within the driving housing with little effort.

The nut can clamp the toothed disk against the bolt so that a defined mounting position is achieved.

A storing mechanism can be provided in which the handle can be placed when in the rest position, ensuring that the screw cannot rotate in the disassembling direction unintendedly.

The effective length of the handle in the actuating position can be longer than in the rest position so that a high torque can be generated for rotating the screw which at the same time reducing the required space for storing the handle.

An extension spring can be provided which biases the handle into the actuating position, ensuring that the handle automatically assumes the actuating position.

Other aspects generally relate to a locking cartridge for mounting devices to each other, the locking cartridge having a clamping end with a displaceable clamping element and a stationary abutment element, and an anchoring end with an anchor shaped so as to be clampable between a clamping element and an abutment element of an adjacent locking assembly. Furthermore, an assembly is provided which comprises at least two devices to be connected to each other, preferably two radio devices, each of the devices comprising at least two of these locking cartridges. Generally speaking, locking cartridges are being used which have an end of a first type and an end of a second type. The first type end of one cartridge can be mechanically locked to the second type and of an adjacent cartridge. This allows connecting devices are equipped with these cartridges to each other, for example on top of each other. Thus, a mechanically strong connection between adjacent devices is possible.

The clamping element can comprise an actuating element which cooperates with an actuating mechanism, the actuating mechanism being adapted to displace the clamping element relative to the abutment element. The actuating mechanism allows an operator to connect or disconnect the two devices to each other or from each other by achieving the required movement of the clamping element relative to the abutment element.

The actuating mechanism can comprise a transmission mechanism for converting an actuation input into a clamping force. The transmission mechanism is in particular provided for converting a moderate actuating input into a high clamping force so that high clamping forces can be generated without requiring high actuating forces.

The actuating mechanism can comprise a screw and a threaded bore such that a rotational movement can be transformed into a translational displacement.

The actuating mechanism can also comprise a wedge which, in a manner similar to a screw and a threaded bore, translates a comparatively low actuating forced into a higher clamping force.

The wedge can have a threaded bore adapted for receiving a screw portion of an actuating element. The combination of a screw mechanism and a wedge is particularly suitable for achieving high clamping forces when applying only moderate actuating forces.

The wedge can cooperate with an edge of a window in a housing in which the wedge is shiftably received. The housing is the base part of the cartridge which can be mounted in the devices to be connected together. It here serves for receiving the counterforces generated when using the wedge for generating the clamping forces.

The abutment element can be a sleeve which is connected to the housing so that it can serve as a guide for the clamping element. The clamping element is preferably slidably received within the sleeve.

A spring can be provided which biases the clamping element away from a clamping position. The spring ensures that the clamping element moves away from the abutment element when the actuating mechanism is operated so as to disengage the devices from each other.

The clamping element can have a neck portion and a head portion, the abutment element can have a concave centering groove, and the anchor can have a laterally open receiving channel and a convex centering projection. The centering features ensure that adjacent cartridges are connected to each other in a precisely centered position.

Each device can comprise four locking cartridges and two actuating elements accessible from a front side of the respective device. This allows connecting the devices to each other and disconnecting them from each other in a reliable manner without there being a need to have access to the lateral sides or the rear side of the radio devices.

A base plate can be provided which comprises a plurality of anchor elements. The base plate serves as a foundation on which radio devices can be mounted on top of each other.

Each of the anchors can have a receiving channel which is open towards the front side of the respective device. This allows removing the devices from a rack without there being a need for lateral space.

The invention will now be described with reference to an embodiment which is shown in the drawings. In the drawings,
- Figure 1 is a horizontal cross-section through two devices connected to each other with locking cartridges,
- Figure 2 shows at an enlarged scale the combination of two of the locking cartridges from Figure 1,

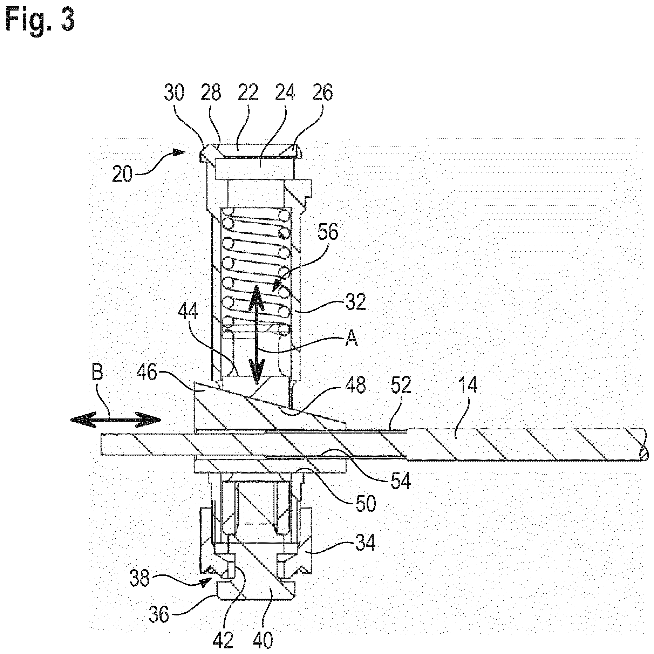

- Figure 3 shows at an even larger scale one of the cartridges shown in Figure 1,
- Figure 4 shows in a perspective view a cartridge in a receiving position,
- Figure 5 shows the cartridge of Figure 4 in a clamping position;
- Figure 6 shows in a perspective view the screw-side portion of a rotating mechanism according to the invention,
- Figure 7 shows in a perspective exploded view the rotating mechanism according to the invention,
- Figure 8 shows the rotating mechanism of Figure 7 with the torque limiter in a longitudinal cross-section,
- Figure 9 shows at an enlarged scale portion IX of Figure 8,
- Figure 10 shows the rotating mechanism according to the invention in a lateral view, and
- Figure 11 shows the rotating mechanism in a longitudinal cross-section.

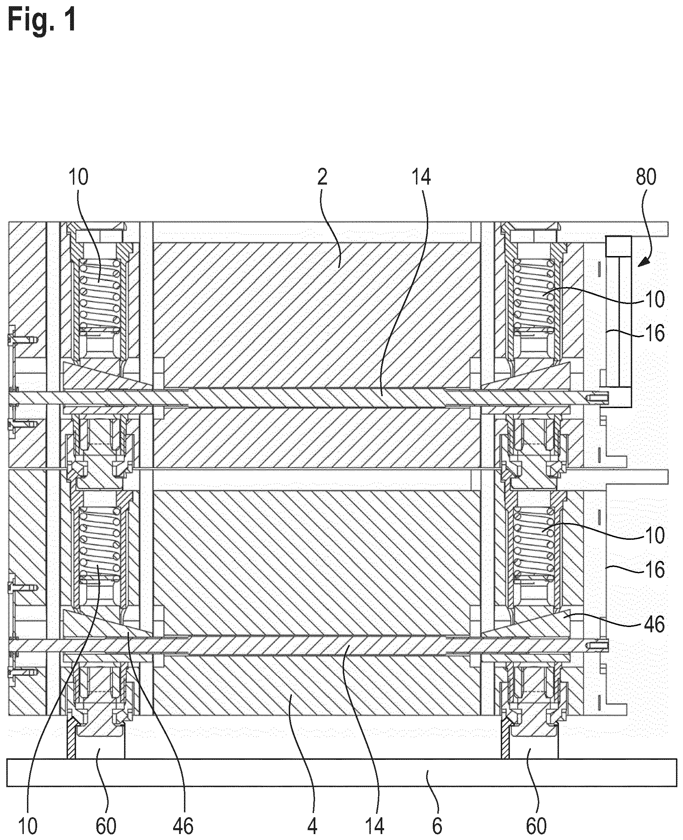

In Figure 1, a first device 2 and a second device 4 are shown, which are mounted on a base plate 6. Devices 2, 4 can be radio devices, in particular for government application such as by police forces.

Each of the devices 2, 4 is provided with a plurality of locking cartridges 10 which generally speaking serve for connecting adjacent devices 2, 4 to each other and for connecting one of the devices to base 6.

Locking cartridges 10 can be operated by means of an actuating mechanism which comprises, apart from other elements discussed below, a screw 14 which extends through the respective device 2, 4, cooperates with the locking cartridges 10 of the respective device 2, 4, and is accessible at a front end 16 of the respective device 2, 4.

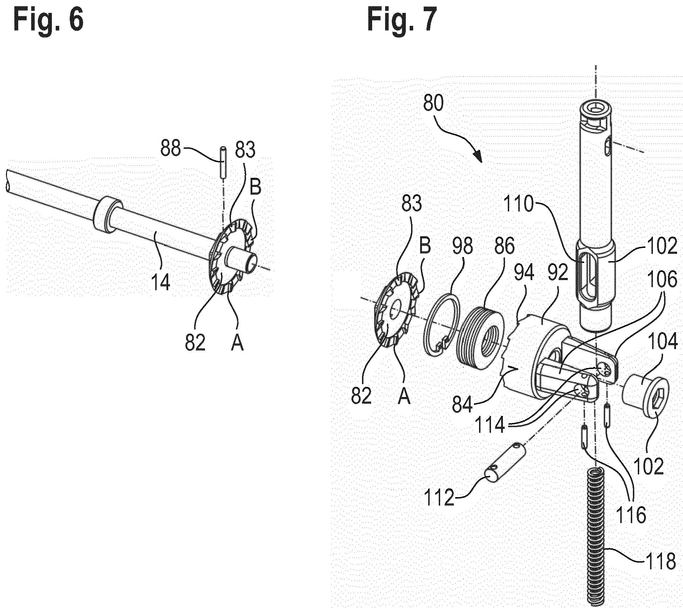

At front end 16, a rotating mechanism is provided which is for rotating screw 14 and which will be described later with reference to Figure 6 to 11. The rotating mechanism is depicted schematically in Figure 1 for the one of screws 14 and is designated with reference numeral 80.

Each of locking cartridges 10 comprises a "passive" end and an "active" end. The active end is intended to grasp and clamp the passive end of an adjacent locking cartridge 10 or a suitable element provided at base 6.

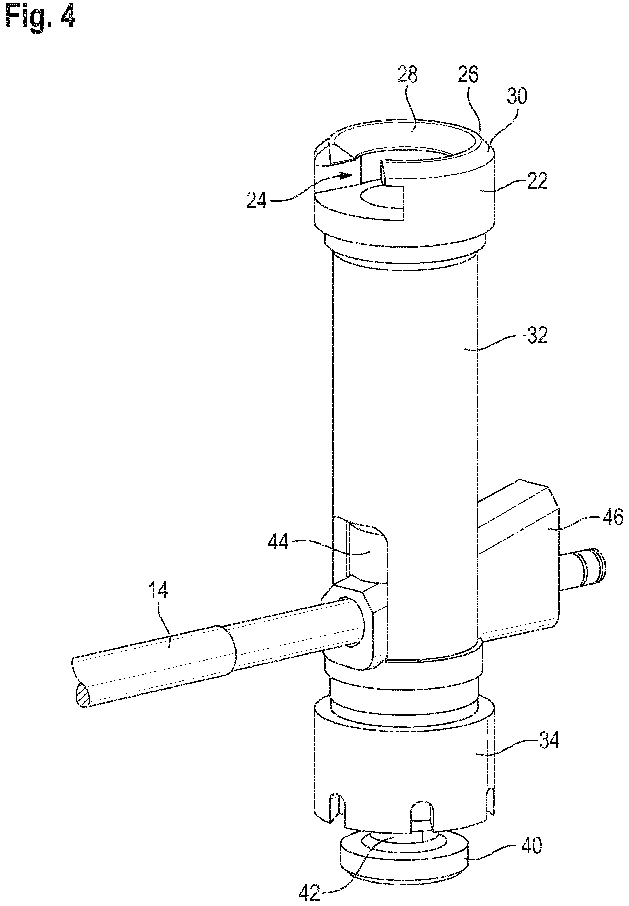

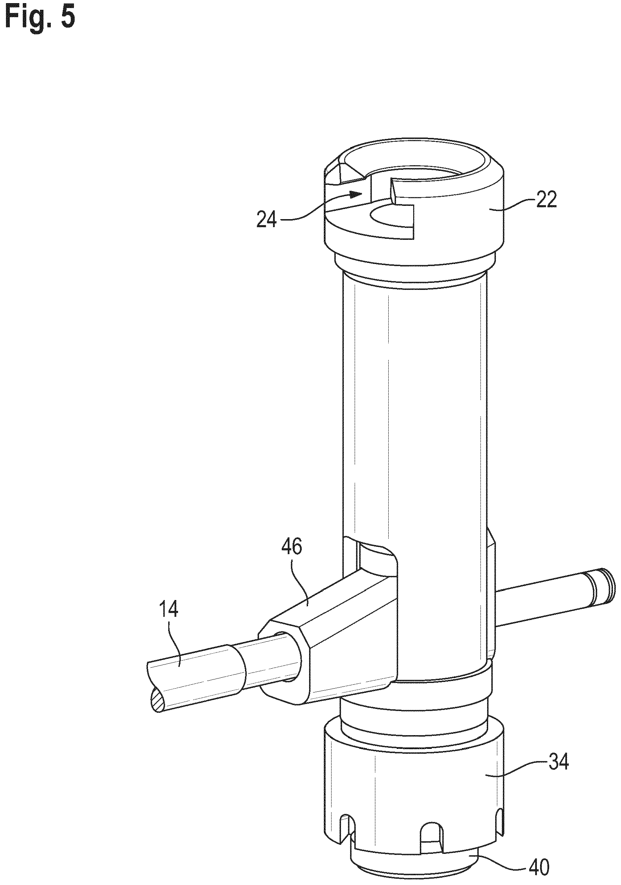

The passive end of each locking cartridge 10 is an anchoring end 20 which comprises an anchor 22. Anchor 22 has a laterally open receiving channel 24 (please see also Figures 4 and 5) which at the distal end is limited by a ring-shaped centering projection 26. Centering projection 26 is in the form of a convex centering projection which has obliquely extending inner and outer centering surfaces 28, 30.

Anchor 22 is rigidly connected to a housing 32 of locking cartridge 10. In the shown embodiment, housing 32 and anchor 22 are formed in one piece.

The active end of the locking cartridges is a clamping end adapted to clamp the anchor 22 of an adjacent locking cartridge 10. The clamping end is provided with a stationary abutment element 34 and a displaceable clamping element 36.

Stationary abutment element 34 is here generally ring-shaped and connected to housing 32. In this particular embodiment, abutment element 34 is threaded onto a thread provided at the end of housing 32 which is opposite to anchor 22.

At its distal end, abutment element 34 has a circumferentially extending centering groove 38, with the inclination of the two lateral surfaces corresponding to the inclination of surfaces 28, 30 of anchor 22.

Clamping element 36 is arranged centrally within abutment element 34 and comprises at its distal end a head portion 40 which is connected via a neck portion 42 to body 44 of clamping element 36.

The diameter of head portion 40 corresponds approximately to the inner dimension of receiving channel 24 and the diameter of neck portion 42 is slightly less than the smallest diameter of centering projection 26.

In this particular embodiment, clamping element 36 is formed in two parts, with the part comprising head portion 40 being threaded into body 44.

Clamping element 36 is displaceably received within housing 32 so that it can move in a translational manner in the direction of arrow A with respect to housing 32.

A wedge 46 is provided which is part of the actuating mechanism and which extends through a recess in clamping element 36 (more specifically: through a recess in body 44) and a window in housing 32. Wedge 46 cooperates with clamping element 36 by engaging at a surface 48 which limits the recess at the side opposite to head portion 40, and an edge 50 which limits the window at the side towards head portion 40. Wedge 46 can be driven in the direction of arrow B with respect to housing 32 of the respective cartridge 10 by means of screw 14. To this end, screw 14 is provided with an external thread 52 which cooperates with an internal thread 54 provided within wedge 46.

As can be seen in Figure 1, each of the screws 14 cooperates with two cartridges 10, with the wedges 46 of the cartridges being oriented in opposite directions. Furthermore, the direction of threads 52, 54 for the two wedges 46 cooperating with one and the same screw 14 are opposite to each other. As a result, turning screw 14 in one direction results in the wedges 46 cooperating with this screw 14 being drawn towards each other, and rotating screw 14 in the opposite direction results in the wedges 46 being spaced from each other.

In an alternative embodiment (not shown), the thread on the screw is provided only at one end while the screw is rotatably connected to the respective wedge at the other end via an abutment. The wedge not provided with a thread is therefore moved by reaction forces.

A spring 56 is arranged within housing 32, with spring 56 piercing clamping element 36 away from a clamping position in a position in which head portion 40 protrudes from abutment element 34.

In a starting position, wedge 46 only slightly engages into the recess in clamping element 36 and the window in housing 32. In this position, head portion 40 protrudes from abutment element 34 (please see the condition shown in Figure 4).

This position of head portion 40 allows to either engage into the receiving channel 24 of an anchor 22 of a device arranged underneath or at an anchoring element 60 provided at base 6.

Assuming that device 4 is to be mounted on base 6, head portion 40 is engaged into a groove of anchoring elements 60 which are connected to base 6. Subsequently, screw 14 is rotated so as to draw wedges 46 towards each other, thereby drawing head portions 40 upwardly so as to clamp the anchoring elements 60 against abutment elements 34 of cartridges 10. As a result, device 4 is rigidly connected to base 6.

In a subsequent step, device 2 is placed on device 4, with cartridges 10 being in a mounting position (please see Figure 4) in which head portion 40 protrudes from the respective cartridge. After engaging head portions 40 into receiving channel 24 of anchors 22 arranged on the opposite of device 4, screw 14 of device 2 is rotated in a clamping direction so as to draw wedges 46 towards each other, thereby drawing head portion 40 into the clamping position (please see Figure 5) in which centering projection 26 is centered within abutment element 34 and device 2 is reliably connected to device 4.

For disengaging devices 2, 4 from each other and from base 6, screws 14 are rotated in the opposite direction (referred to here as being the disassembling direction) such that head portions 40 are displaced from the clamping position into the mounting position in which they protrude from the respective cartridge 10. Then, head portion 40 can be disengaged from receiving channel 24 of the anchor arranged underneath.

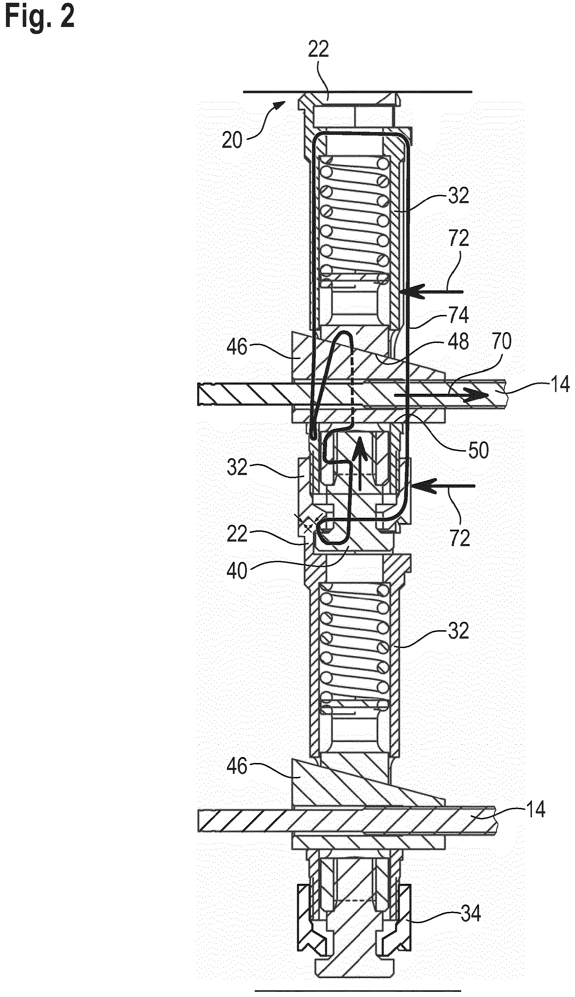

The forces occurring during actuation of the respective cartridge are shown in Figure 2.

The force exerted by screw 14 onto wedge 46 is shown with arrow 70. This force is counteracted by forces 72 resulting from housing 32 of the respective locking cartridge 10 and abutment sleeve 34 which are both received within the respective device 2, 4. The closed flow path of the forces generated by wedge 46 cooperating with clamping element 34 and clamping element 34 cooperating with anchor 22 is shown with a thin closed line 74.

One advantage of the described embodiment is that a comparatively low actuating force of screw 14 results in high clamping forces as there is a first amplification via threads 52, 54 and a second amplification via wedges 46.

It is generally possible to use an actuating mechanism which directly provides the axial displacement of head portion 40 instead of using a mechanism which extends perpendicularly with respect to the central access of the respective locking cartridges.

Another advantage of the cartridges is that they provide for a positioning and fixing at the same time so that a compact design is achieved.

It is also advantageous that two cartridges can be actuated with one screw 14.

The locking cartridges generate the axial clamping force without placing an axial load on adjacent components. It is here only the lateral force between two simultaneously actuated cartridges which has to be counteracted by the respective device.

The combination of threads 52, 54 and wedges 46 generated a locking mechanism which is self-locking because of the friction involved in the cooperating surfaces.

Due to the short force flow and the resulting high rigidity, the required pretensioning force is very low.

Any manufacturing tolerances are simply compensated for by the preload. Only a few dimensions have to be manufactured with a small tolerance field, which enables manufacturing costs to be optimized.

The contacting cone surfaces of the cartridge and cone nut can be produced by turning, which simply allows high precision at low cost.

The fit of the cartridge can be produced by machining from a clamping direction on the processing machine. This results in inherent high possible accuracy for all three directions of the Cartesian coordinate system.

Unlocking can be accomplished by spring force assistance, which favors easy separation of the two objects.

Depending on the nature of the object, parts of the locking mechanism can be integrated to reduce the variety of parts.

If this principle is designed as a cartridge or insert part, a damaged part, if any, can be replaced.

Recycling is simplified by the use of a harmonized alloy and easily separable connections.

With reference to Figures 6 to 11, rotating mechanism 80 used for rotating screws 14 in the clamping direction and the disassembling direction will now be described in detail.

Generally speaking, rotating mechanism 80 is provided for allowing a user to rotate screw 14 in the clamping direction when two devices 2, 4 are to be connected to each other and to base 6, and to rotate screw 14 in the disassembling direction when the devices 2, 4 are to be disconnected from each other and from base 6.

Rotating mechanism 80 is designed to allowing a user to apply the necessary torques to screw 14 without there being the need to have access to a tool. Further, rotating mechanism 80 is designed to ensure that no excessive torque can be applied to screw 14 in the clamping direction while at the same time ensuring that the necessary torque for rotating screw 14 in the disassembling direction can be applied under all circumstances. For preventing that excessive torque is applied to screw 14, rotating mechanism 80 includes a torque limiter. Further, an override mechanism is included in rotating mechanism 80 so that it is ensured that the torque limiter does not limit the torque which can be applied to screw 14 in the disassembling direction.

The torque limiter and the override mechanism are formed from two toothed elements 82, 84 which are pressed against each other by means of a biasing spring 86. Toothed elements 82, 84 each have an asymmetrical toothing so that different levels of torque transmission via the toothings can be achieved.

One of toothed elements 82, 84 is a toothed disk 82 which is mounted non-rotatable to screw 14 at front end 16. Toothed disk 82 is provided with an axially oriented toothing 83.

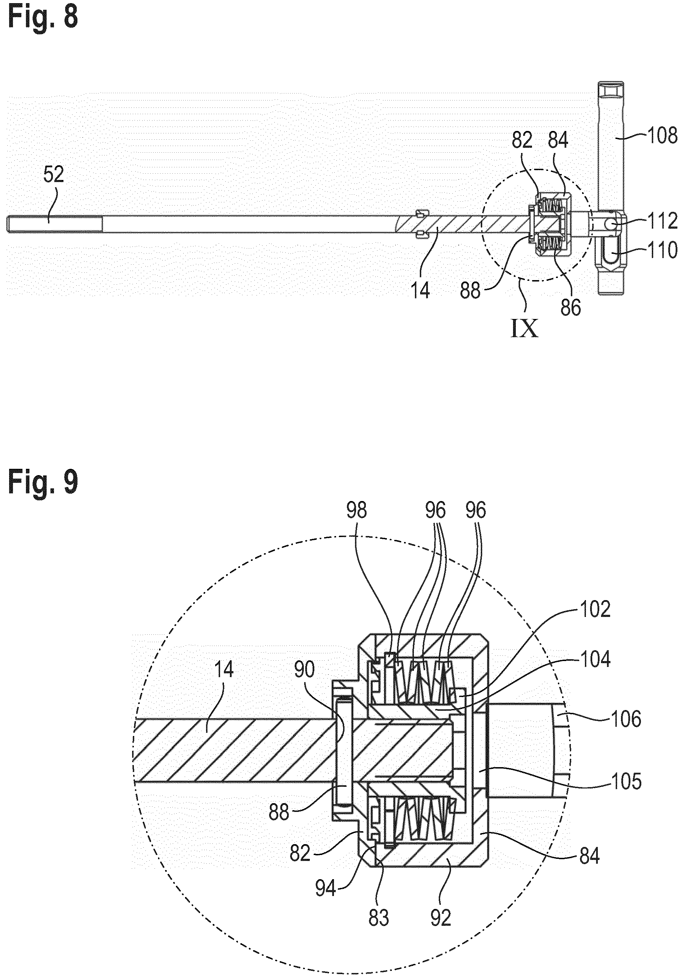

For mounting toothed disk 82 to screw 14, a bolt 88 is provided which extends through a bore 90 in screw 14 (please see in particular Figure 9). Bolt 88 is received in a pocket on a "rear side" of toothed disk 82 which is the side facing away from the toothing of disk 82. The width of the pocket on the rear side of toothed disk 82 is slightly larger than the diameter of bolt 88 so that the disk is held non-rotatably.

The other one of toothed elements 82, 84 is a driving housing 84 which is generally cup-shaped with a peripheral wall 92. On an annular front face of driving peripheral wall 92, an axially oriented toothing 94 is provided.

Within driving housing 84, biasing spring 86 is received. Biasing spring 86 is here formed from a plurality of individual disk springs ("Belleville springs") 96. The spring package formed from disk springs 96 is mounted within driving housing 84 by means of a circlip 98 which engages into an annular groove formed in the interior surface of driving housing 84 adjacent toothing 94. The other end of the spring package formed from disk springs 96 abuts at a flange 102 formed on a nut 104 which is threaded onto the free end of screw 14. By tightening nut 104, biasing spring 86 is compressed and biases toothing 94 of driving housing 84 against toothing 83 of disk 82. Driving housing 84 is provided with an axially extending hole 105 which provided access to nut 104 so as to allow tightening of the nut, e.g. by inserting an Allen wrench.

Nut 104 is here tightened until it contacts disk 82. This mechanically defines the position of nut 104. In an alternative, the compression of biasing spring 86 can be variable by tightening nut 104 until an individual pretension is achieved. Nut 104 is then locked in its position.

Toothings 83, 94 are asymmetrical in that one of flanks of each tooth is arranged in a steeper orientation than the other flank of the respective tooth.

Here, one of the flanks (here designated with "A") is arranged in a plane which extends through the central axis of screw 14. In other words, a line which is perpendicular to the flanks A extends in a plane which is perpendicular to the central axis of screw 14.

The other flank (here designated with "B") is arranged with a slight inclination with respect to a plane which is perpendicular to the central axis of screw 14.

The different orientations of the flanks A, B of toothings 83, 94 in combination with the pretensioning force with which toothing 94 is pressed against toothing 83 forms a torque limiter having two different levels depending on the direction of torque transmission.

When a torque is applied via driving housing 84 in the clamping direction of screw 14, flanks B are used for torque transmission. The maximum torque which can be transmitted is defined by the pretensioning force exerted with biasing spring 86 and by the inclination of flanks A. The higher the pretensioning force and the steeper the orientation of the flanks, the higher the torque which can be transmitted before driving housing 84 is axially displaced against the force of biasing spring 86 and toothing 94 slips with respect to toothing 83. In this condition, no further torque can be transmitted.

When a torque is applied via driving housing 84 in the disassembling direction of screws 14, flanks A are used for torque transmission. Because of the orientation of the flanks A, the force transmitted via flanks A does not have an axial component so there is no tendency for driving housing 84 to be axially displaced with respect to disk 82. Thus, the orientation of the flanks A acts as an override mechanism for the torque limiter, and there is no limitation of the transmittable torque.

On its side facing away from toothing 94, driving housing 84 is provided with two holding lugs 106 between which a handle 108 is mounted.

Handle 108 is an elongated tube with an oblong hole 110 through which a mounting bolt 112 extends. Mounting bolt 112 is received in two openings 114 provided adjacent the free ends of holding lugs 108 and axially fixed therein by means of two small fixation pins 116.

Handle 108 is displaceable along its longitudinal axis because of oblong hole 110 allowing for a displacement of handle 108 with respect to mounting bolt 112. In Figure 8, handle 108 is shown in a "short" position which is referred to as being a rest position. From this position, handle 108 can be displaced (with respect to Figure 8) upwardly so that the effective length of handle 108 (the distance between mounting bolt 112 and the free end having the larger distance from mounting bolt 112) is larger than in the rest position. The displaced position is referred to as being an actuating position.

An extension spring 118 is arranged within handle 108. It abuts with one end in the interior of handle 108 and with its other end at mounting bolt 112. Accordingly, handle 108 is biased into the actuating position.

A storing mechanism 120 is provided which fixes handle 108 in the rest position and in a defined, non-rotatable position. In the shown embodiment, storing mechanism 120 fixes handle 108 in a vertical position.

Storing mechanism 120 can be a pair of spring arms or any other connection which allows to reliably fix handle 108 in the desired position.

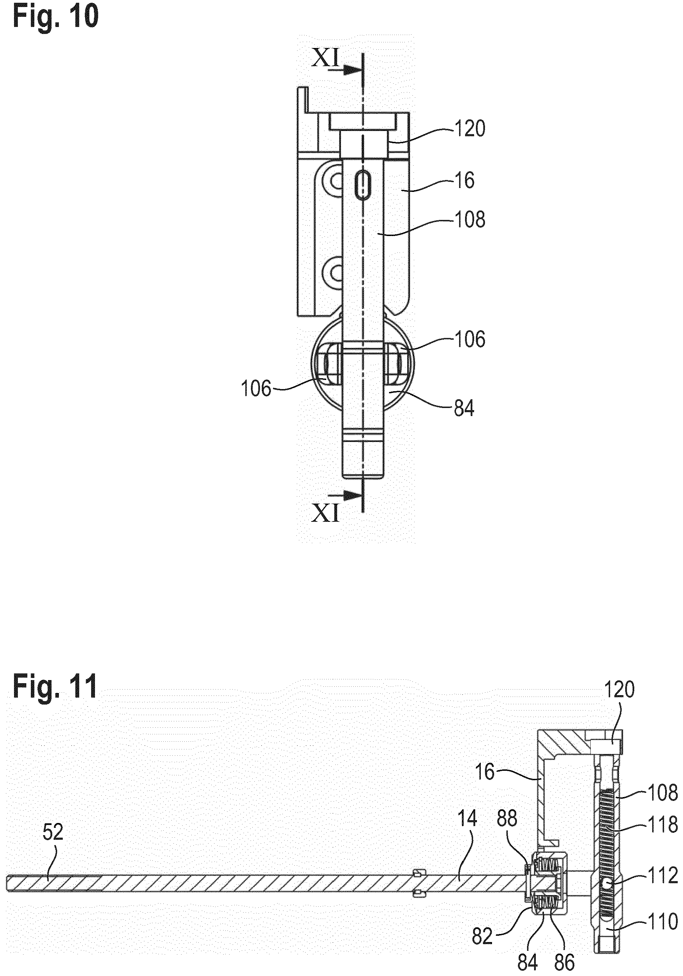

For mounting the devices to each other or for disassembling them, handle 108 is brought to the actuating position. In order to not interfere with storing mechanism 120, handle 108 is slightly tilted with its longer end outwardly as schematically indicated with the dashed line in Figure 11. Then, screw 14 can be rotated.

When the devices 2, 4 are being mounted, screw 14 is turned in the clamping direction. The torque necessary in this regard increases until the maximum torque transmitted by the torque limiter is reached. Then, further rotation of handle 108 does not result in motion of screw 14. Handle 108 can nevertheless be continued to be turned until it is in a position (here vertical) in which it can be transferred from the actuating position into the rest position and fixed in storing mechanism 120. Because of the fixation of handle 108 in storing mechanism 120, unintentional rotation of screw 14 in the disassembling direction is reliably prevented.

## Claims

1. A locking mechanism for mounting devices (2, 4) to each other, the locking mechanism having a plurality of locking cartridges (10) receivable in the devices (2, 4), the locking cartridges having a clamping system, the clamping system having a screw (14) and a rotating mechanism (80) for rotating the screw (14) in a clamping direction and a disassembling direction, the rotating mechanism (80) including a torque limiter (82, 84, 86) for limiting a torque applied to the screw (14) in the clamping direction, **characterized in that** a handle (108) is provided which can assume a rest position and an actuating position.

2. The locking mechanism of claim 1, wherein the rotating mechanism (80) includes an override mechanism for applying a torque onto the screw (14) in the disassembling direction which is higher than the torque transmitted by the torque limiter in the clamping direction.

3. The locking mechanism of claim 1 or claim 2, wherein the torque limiter includes a biasing spring (86) for creasing a pretension.

4. The locking mechanism of any one of the preceding claims, wherein the torque limiter includes at least one toothed element (82, 84) with asymmetrical teeth.

5. The locking mechanism of any one of the preceding claims, wherein the torque limiter includes a toothed disk (82) which is mounted non-rotationally to the screw (14), and a driving housing (84) which has a toothing cooperating (94) with the toothed disk.

6. The locking mechanism of claim 5, wherein the toothed disk (82) is held non-rotatably on the screw (14) by means of a bolt (88) extending through the screw (14) and being received in a pocket on the side of the disk (82) which faces away from the teeth (83) of the disk (82).

7. The locking mechanism of claim 5 or claim 6, wherein one flank of the teeth is arranged in a plane which extends through the central axis of the screw (14), and the other flank of the teeth is arranged with a slight inclination with respect to a plane which is perpendicular to the central axis of the screw (14).

8. The locking mechanism of any one of claims 5 to 7, wherein a spring package (96) is arranged within the driving housing (84).

9. The locking mechanism of claim 8, wherein the spring package (96) is supported with one end at the driving housing (84) and with the opposite end at a nut (104) which engages at the screw (14).

10. The locking mechanism of claim 9, wherein the spring package (96) is supported at the driving housing (84) by means of a circlip (98) which engages into a groove formed within the driving housing (84).

11. The locking mechanism of claim 9 of claim 10, wherein the nut (104) clamps the toothed disk (82) against the bolt (88).

12. The locking mechanism of claim 1, wherein a storing mechanism (120) is provided in which the handle (108) can be placed when in the rest position.

13. The locking mechanism of claim 1 or claim 12, wherein the effective length of the handle (108) in the actuating position is longer than in the rest position.

14. The locking mechanism of claim 13, wherein an extension spring (118) is provided which biases the handle (108) into the actuating position.

## Patentansprüche

1. Verriegelungsmechanismus zum Montieren von Vorrichtungen (2, 4) aneinander, wobei der Verriegelungsmechanismus eine Vielzahl von Verriegelungspatronen (10) aufweist, die in den Vorrichtungen (2, 4) aufnehmbar sind, wobei die Verriegelungspatronen ein Klemmsystem aufweisen, wobei das Klemmsystem eine Schraube (14) und einen Drehmechanismus (80) zum Drehen der Schraube (14) in eine Klemmrichtung und eine Demontagerichtung aufweist, wobei der Drehmechanismus (80) einen Drehmomentbegrenzer (82, 84, 86) zum Begrenzen eines auf die Schraube (14) in der Klemmrichtung ausgeübten Drehmoments einschließt, **dadurch gekennzeichnet, dass** ein Griff (108) bereitgestellt ist, der eine Ruheposition und eine Betätigungsposition einnehmen kann.

2. Verriegelungsmechanismus nach Anspruch 1, wobei der Drehmechanismus (80) einen Übersteuerungsmechanismus zum Aufbringen eines Drehmoments auf die Schraube (14) in der Demontagerichtung, das höher als das durch den Drehmomentbegrenzer in der Klemmrichtung übertragene Drehmoment ist, einschließt.

3. Verriegelungsmechanismus nach Anspruch 1 oder 2, wobei der Drehmomentbegrenzer eine Vorspannfeder (86) zum Erhöhen einer Vorspannung einschließt.

4. Verriegelungsmechanismus nach einem der vorstehenden Ansprüche, wobei der Drehmomentbegrenzer mindestens ein Zahnelement (82, 84) mit asymmetrischen Zähnen einschließt.

5. Verriegelungsmechanismus nach einem der vorstehenden Ansprüche, wobei der Drehmomentbegrenzer eine Zahnscheibe (82), die drehfest an der Schraube (14) montiert ist, und ein Antriebsgehäuse (84), das eine mit der Zahnscheibe zusammenwirkende (94) Verzahnung aufweist, einschließt.

6. Verriegelungsmechanismus nach Anspruch 5, wobei die Zahnscheibe (82) drehfest auf der Schraube (14) mittels eines Bolzens (88) gehalten ist, der sich durch die Schraube (14) erstreckt und in einer Aussparung auf der Seite der Scheibe (82) aufgenommen ist, die von den Zähnen (83) der Scheibe (82) abgewandt ist.

7. Verriegelungsmechanismus nach Anspruch 5 oder 6, wobei eine Flanke der Zähne in einer Ebene angeordnet ist, die sich durch die Mittelachse der Schraube (14) erstreckt, und die andere Flanke der Zähne mit einer leichten Neigung in Bezug auf eine Ebene angeordnet ist, die senkrecht zu der Mittelachse der Schraube (14) verläuft.

8. Verriegelungsmechanismus nach einem der Ansprüche 5 bis 7, wobei ein Federpaket (96) innerhalb des Antriebsgehäuses (84) angeordnet ist.

9. Verriegelungsmechanismus nach Anspruch 8, wobei das Federpaket (96) mit einem Ende an dem Antriebsgehäuse (84) und mit dem gegenüberliegenden Ende an einer Mutter (104) abgestützt ist, die an der Schraube (14) eingreift.

10. Verriegelungsmechanismus nach Anspruch 9, wobei das Federpaket (96) an dem Antriebsgehäuse (84) mittels eines Sicherungsrings (98) abgestützt ist, der in eine Nut eingreift, die innerhalb des Antriebsgehäuses (84) ausgebildet ist.

11. Verriegelungsmechanismus nach Anspruch 9 nach Anspruch 10, wobei die Mutter (104) die Zahnscheibe (82) gegen den Bolzen (88) klemmt.

12. Verriegelungsmechanismus nach Anspruch 1, wobei ein Aufbewahrungsmechanismus (120) bereitgestellt ist, in dem der Griff (108) platziert werden kann, wenn er in der Ruheposition ist.

13. Verriegelungsmechanismus nach Anspruch 1 oder 12, wobei die effektive Länge des Griffs (108) in der Betätigungsposition länger als in der Ruheposition ist.

14. Verriegelungsmechanismus nach Anspruch 13, wobei eine Zugfeder (118) bereitgestellt ist, die den Griff (108) in die Betätigungsposition vorspannt.

## Revendications

1. Mécanisme de verrouillage permettant de monter des dispositifs (2, 4) entre eux, le mécanisme de verrouillage ayant une pluralité de cartouches de verrouillage (10) pouvant être reçues dans les dispositifs (2, 4), les cartouches de verrouillage ayant un système de serrage, le système de serrage ayant une vis (14) et un mécanisme de rotation (80) pour faire tourner la vis (14) dans un sens de serrage et un sens de démontage, le mécanisme de rotation (80) incluant un limiteur de couple (82, 84, 86) permettant de limiter un couple appliqué à la vis (14) dans le sens de serrage, **caractérisé en ce qu'**une poignée (108) est prévue, laquelle peut prendre une position de repos et une position d'actionnement.

2. Mécanisme de verrouillage selon la revendication 1, dans lequel le mécanisme de rotation (80) comporte un mécanisme de forçage pour appliquer un couple sur la vis (14) dans le sens de démontage qui est supérieur au couple transmis par le limiteur de couple dans le sens de serrage.

3. Mécanisme de verrouillage selon la revendication 1 ou la revendication 2, dans lequel le limiteur de couple comporte un ressort de sollicitation (86) pour augmenter une prétension.

4. Mécanisme de verrouillage selon l'une quelconque des revendications précédentes, dans lequel le limiteur de couple comporte au moins un élément denté (82, 84) à dents asymétriques.

5. Mécanisme de verrouillage selon l'une quelconque des revendications précédentes, dans lequel le limiteur de couple comporte un disque denté (82) qui est monté de manière non rotative sur la vis (14), et un boîtier d'entraînement (84) qui présente une denture (94) coopérant avec le disque denté.

6. Mécanisme de verrouillage selon la revendication 5, dans lequel le disque denté (82) est maintenu de manière non rotative sur la vis (14) au moyen d'un boulon (88) s'étendant à travers la vis (14) et étant reçu dans un logement sur le côté du disque (82) qui est orienté à l'opposé des dents (83) du disque (82).

7. Mécanisme de verrouillage selon la revendication 5 ou la revendication 6, dans lequel un flanc des dents est agencé dans un plan qui passe par l'axe central de la vis (14), et l'autre flanc des dents est agencé avec une légère inclinaison par rapport à un plan qui est perpendiculaire à l'axe central de la vis (14).

8. Mécanisme de verrouillage selon l'une quelconque des revendications 5 à 7, dans lequel un jeu de ressorts (96) est agencé dans le boîtier d'entraînement (84).

9. Mécanisme de verrouillage selon la revendication 8, dans lequel le jeu ressorts (96) est supporté avec une extrémité au niveau du boîtier d'entraînement (84) et avec l'extrémité opposée au niveau d'un écrou (104) qui vient en prise au niveau de la vis (14).

10. Mécanisme de verrouillage selon la revendication 9, dans lequel le jeu de ressorts (96) est supporté au niveau du boîtier d'entraînement (84) au moyen d'un anneau de retenue (98) qui vient en prise dans une rainure formée à l'intérieur du boîtier d'entraînement (84).

11. Mécanisme de verrouillage selon la revendication 9 ou la revendication 10, dans lequel l'écrou (104) serre le disque denté (82) contre le boulon (88).

12. Mécanisme de verrouillage selon la revendication 1, dans lequel un mécanisme de rangement (120) est prévu, dans lequel la poignée (108) peut être placée en position de repos.

13. Mécanisme de verrouillage selon la revendication 1 ou la revendication 12, dans lequel la longueur effective de la poignée (108) dans la position d'actionnement est plus longue que dans la position de repos.

14. Mécanisme de verrouillage selon la revendication 13, dans lequel est prévu un ressort d'extension (118) qui sollicite la poignée (108) dans la position d'actionnement.
